# EUROPEAN PATENT SPECIFICATION

(11) **EP 3 619 061 B1**
(45) Date of publication and mention of the grant of the patent: **02.06.2021**
(21) Application number: 17721400.4
(22) Date of filing: 05.05.2017
(51) Int. Cl.: B60G 11/27, B60G 17/018, B60G 17/0185, G01M 17/04

(54) **METHOD FOR DETERMINING AGING OF A VEHICLE SUSPENSION ARRANGEMENT**
VERFAHREN ZUR BESTIMMUNG DER ALTERUNG EINER FAHRZEUGAUFHÄNGUNGSANORDNUNG
PROCÉDÉ DE DÉTERMINATION DU VIEILLISSEMENT D'UN SYSTÈME DE SUSPENSION DE VÉHICULE

(43) Date of publication of application: 11.03.2020
(73) Proprietor: Volvo Truck Corporation, 405 08 Göteborg (SE)
(72) Inventor: JOHANSSON, Per, 417 63 Göteborg (SE); ANDERSSON, Thomas, 439 32 Onsala (SE); TURESSON, Jesper, 417 65 Göteborg (SE)
(74) Representative: Kransell & Wennborg KB
(86) International application number: PCT/EP2017/060809
(87) International publication number: WO 2018/202315

(56) References cited:
- DE-A1-102006 016 141
- US-A1- 2005 035 562
- US-A1- 2011 083 500
- US-A1- 2014 095 015

## Description

### TECHNICAL FIELD

The present invention relates to a method for determining aging of a vehicle suspension arrangement. The invention relates to a control unit arranged for determining aging of a vehicle suspension arrangement. The invention is applicable on vehicles, in particularly low, medium and heavy duty vehicles commonly referred to as trucks. Although the invention will mainly be described in relation to a truck, it may also be applicable for other type of vehicles having suspension arrangements comprising flexible bellows.

### BACKGROUND

In connection to low-, medium and heavy duty vehicles, also commonly referred to as trucks, air suspension arrangements are commonly mounted between the wheel axle and the vehicle chassis in order to absorb the vibrations caused by, for example, the road surface at which the vehicle is driving. A typical air suspension arrangement comprises a flexible bellows, or flex member, which is connected to the vehicle chassis, and a piston which is connected to the wheel axle. The chassis can be raised and lowered in relation to the wheel axle by means of inflating or deflating air into the space formed by the flexible bellows. The flexible bellows is thus arranged to roll up and down on the piston when inflating/deflating air therein.

During operation of the air suspension arrangement, i.e. when driving the vehicle, the air suspension arrangement will be aged and not provide the same suspension characteristics as a new and unused air suspension arrangement. One main reason for the aging of the air suspension arrangement is that the flexible bellows will degrade over time. When the flexible bellows has been degraded to a certain extent, it must be replaced by a new one for providing sufficient suspension to the vehicle.

However, it may be difficult to properly determine the degradation of the flexible bellows which often results in that the flexible bellows is replaced with a new one based on certain pre-set intervals. Hereby, there is a risk that the flexible bellows is replaced with a new one before it is necessary to do so, and a properly functioning flexible bellows is thus unnecessarily discarded.

There is thus a need to be able to properly determine aging of the vehicle suspension arrangement for improved prediction of aging of the flexible bellows of a vehicle suspension arrangement

The document US 2014/095015 A1 discloses a method for determining aging of a vehicle suspension arrangement according to the preamble of claim 1.

### SUMMARY

It is an object of the present invention to provide a method for determining aging of a vehicle suspension arrangement which at least partially overcomes the above described deficiencies. This is achieved by a method according to claim 1.

According to a first aspect of the present invention, there is provided a method for determining aging of a vehicle suspension arrangement arranged between a frame and a wheel axle of a vehicle, the suspension arrangement comprising a flexible bellows for damping motions from the wheel axle, the method comprising the steps of determining a distance moved by a portion of the flexible bellows when the suspension arrangement is exposed to an external load; determining a gas pressure level within the flexible bellows when the portion of the flexible bellows has moved the distance; determining a relationship between the determined gas pressure level within the flexible bellows and the distance moved by the portion of the flexible bellows; comparing the relationship with a predetermined threshold level; and determining that the flexible bellows is aged if a difference between the relationship and the predetermined threshold level is outside a predetermined threshold range. The wording "portion of the flexible bellows" should be construed such that a distance moved by a certain position of the flexible bellows is determined. Preferably, the distance moved by the so-called rolling lobe of the flexible bellows is detected. The portion of the flexible bellows is thus moved during operation of the vehicle, whereby the dynamic loading corresponds to the external load exerted on the suspension arrangement. The external load is preferably exposing the vehicle suspension arrangement to a compression force in the axial direction of the vehicle suspension arrangement.

An advantage is that an online mapping of the characteristics of the flexible bellows can be continuously detected. A comparison with corresponding data for a new and unused flexible bellows can thus be made for determining if the flexible bellows is aged, and to what extent. Furthermore, a control unit may be adapted to receive data for determining reference values for a flexible bellows, and to adapt the reference value based on the specific flexible bellows. Hence, the control unit may be able to learn which reference values that are acceptable and at what limits the flexible bellows should be replaced with a new one.

An aged flexible bellows will increase in effective area as it will roll-up on a piston connecting the flexible bellows to a wheel axle of the vehicle, such that the rolling lobe is positioned at an increased elevated position in an unloaded condition in relation to the position of the rolling lobe for a new and unused flexible bellows. An aged flexible bellows thus has to be exposed to an increased external load to reach the same position as a new and unused flexible bellows.

The inventors have unexpectedly realized that deviations in pressure and displacement can be continuously logged to detect deviations relative to corresponding parameters of a new and unused flexible bellows. In particularly, for a detected displacement, the peak pressure for a new and unused flexible bellows will be higher in comparison to an aged flexible bellows. The threshold levels for the reference flexible bellows, i.e. the new and unused flexible bellows can be stored in a control unit of the vehicle.

According to an example embodiment, the predetermined threshold level may correspond to a relationship between a gas pressure level within a reference flexible bellows and a distance moved by a portion of the reference flexible bellows.

As described above, for a given distance moved by the portion of the flexible bellows, different pressure values will be obtained in dependence of the aging of the flexible bellows, where the pressure within the flexible bellows is lower for an aged flexible bellows in comparison to a new and unused flexible bellows.

According to an example embodiment, the suspension arrangement may comprise a piston comprising a first, cylindrical portion and a second portion, the second portion has a geometric shape different in comparison to the geometric shape of the first portion, wherein the flexible bellows is at least partially connected to the first portion of the piston and arranged to move relative to the first portion when the suspension arrangement is exposed to the external load.

The second portion may take various forms and shapes. According to an example embodiment, the second portion of the piston may comprise a taper shaped surface. Other shapes are of course also conceivable, such as e.g. a concave shape, an indentation, etc. For the present implementation, the main purpose of the second portion is to provide an area where a relatively distinct deviation in pressure within the flexible bellows can be detected.

According to an example embodiment, the flexible bellows may be exposed to an external load moving the portion to reach the second portion of the piston, the method may further comprise the steps of determining the distance moved by the portion of the flexible bellows when the portion of the flexible bellows reaches the second portion of the piston; comparing the determined distance to the second portion with a predetermined reference distance to reach the second portion; and determining that the flexible bellows is aged if a difference between the determined distance and the predetermined reference distance is outside a predetermined distance range.

By moving the portion of the flexible bellows, i.e. the rolling lobe to reach the second portion of the piston, the effective area of the flexible bellows will be significantly affected. Hereby, a substantially distinct deviation in the pressure within the flexible bellows will be detected. Hence, forcing the portion of the flexible bellows to reach the second portion will provide for improved detectability of the specific pressure level within the flexible bellows, which pressure level can be compared to a relation between the traveled distance and the pressure for a new and unused flexible bellows.

According to an example embodiment, the suspension arrangement may comprise a level indicator for determining distance moved by the portion of the flexible bellows. Hereby, the distance "traveled" by the portion of the flexible bellows can be detected.

According to an example embodiment, the external load may be a compression force acting on the suspension arrangement, the compression force being determined based on the distance detected by the level indicator and a detected mass of the vehicle.

Accordingly, the acceleration can be determined based on the signals received from the level indicator, and the mass can be determined/estimated for the vehicle by known means.

According to an example embodiment, the suspension arrangement may comprise a gas pressure sensor arranged inside the flexible bellows for measuring the gas pressure level. Hereby, the gas pressure level within the flexible bellows can be continuously measured, either during motion of the vehicle or statically when the vehicle is standing still.

According to a second aspect, there is provided a control unit arranged for determining aging of a vehicle suspension arrangement arranged between a frame and a wheel axle of a vehicle, the suspension arrangement comprising a flexible bellows for damping motions from the wheel axle, the control unit being configured to receive a signal from a level indicator for determining a distance moved by a portion of the flexible bellows when the suspension arrangement is exposed to an external load; receive a signal from a gas pressure sensor for determining a gas pressure level within the flexible bellows when the portion of the flexible bellows has moved the distance; determine a relationship between the determined gas pressure level within the flexible bellows and the distance moved by the portion of the flexible bellows; compare the relationship between the determined gas pressure level within the flexible bellows and the distance moved by the portion of the flexible bellows with a predetermined threshold level; and determine that the flexible bellows is aged if a difference between the relationship between the determined gas pressure level within the flexible bellows and the distance moved by the portion of the flexible bellows and the predetermined threshold level is outside a predetermined threshold range.

Effects and features of the second aspect are largely analogous to those described above in relation to the first aspect.

According to a third aspect, there is provided a vehicle comprising a vehicle suspension arrangement arranged between a frame and a wheel axle of the vehicle, and a control unit according to the second aspect.

According to a fourth aspect, there is provided a computer program comprising program code means for performing the steps of any one of the embodiments described above in relation to the first aspect when the program is run on a computer.

According to a fifth aspect, there is provided a computer readable medium carrying a computer program comprising program means for performing the steps of any of the embodiments described above in relation to the first aspect when the program means is run on a computer.

Effects and features of the third, fourth and fifth aspects are largely analogous to those described above in relation to the first aspect.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Fig. 1 is a lateral side view illustrating an example embodiment of a vehicle in the form of a truck;
Fig. 2 is cut-out view of a suspension arrangement and flexible bellows according to an example embodiment;
Fig. 3 is a graph illustrating the characteristics of the flexible bellows according to an example embodiment; and
Fig. 4 is a flow chart illustrating a method according to an example embodiment.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

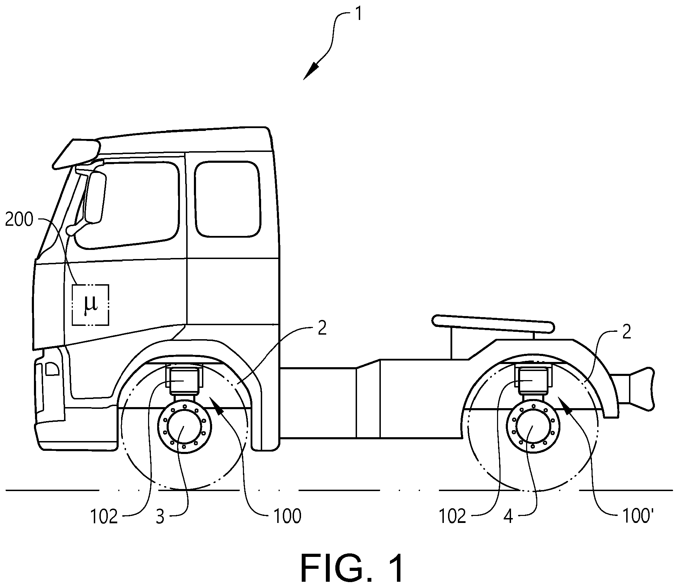

With particular reference to Fig. 1, there is provided a vehicle 1 in the form of a truck for which the vehicle suspension arrangement 100 according to the invention is particularly suitable for. The vehicle 1 comprises a front vehicle suspension arrangement 100 connecting the frame 2 to the front wheel axle 3, and a rear vehicle suspension arrangement 100' connecting the frame 2 to the rear wheel axle 4. Hence, each of the vehicle suspension arrangement 100, 100' is arranged to damp/absorb loads from the respective wheel axles during motion of the vehicle 1. The vehicle 1 may of course comprise more than two wheel axles. As can be seen in Fig. 1, the vehicle suspension arrangement 100 comprises a flexible bellows 102 into which gas can be added or drained. Hereby, the air suspension arrangement 100 can be used for controlling the height of the frame relative the ground level.

The vehicle 1 further comprises a control unit 200 arranged to receive control signals and deliver control signals for determining aging of the flexible bellows as will be described below.

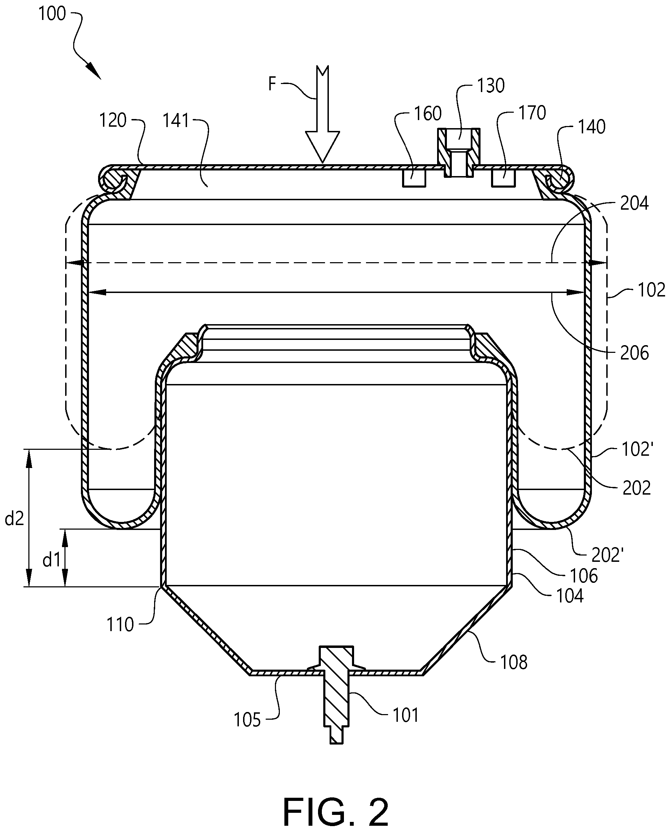

In order to describe the vehicle suspension arrangement 100, and in particular the flexible bellows 102 in further detail, reference is made to Fig. 2. As can be seen in Fig. 2, a flexible bellows 102' is indicated with solid lines. This flexible bellows 102' will in the following be referred to as a reference flexible bellows 102'. The reference flexible bellows 102' corresponds to a new and unused flexible bellows. A flexible bellows that has been used for a certain period of time is indicated with reference numeral 102.

As can be seen in Fig. 2, the vehicle suspension arrangement 100 further comprises a piston 104 having a lower portion 105 which is connected to one of the wheel axles 3, 4. The lower portion 105 of the piston 104 may be either directly connected to the wheel axle 3, 4 by means of a suitable fixation arrangement, such as a bolt 101, or indirectly connected to the wheel axle 3, 4 via, for example, a bracket or the like (not shown). In the example embodiment depicted in Fig. 2, the piston has a first, cylindrical portion 106 and a second portion 108 arranged below the first portion 106. According to the embodiment depicted in Fig. 2, the second portion 108 may be arranged in a tapered shape configuration, whereby the diameter of the second portion 108 is continuously reduced as seen in a direction from the first portion 106 towards the lower portion 105 of the piston 104. The first 106 and second 108 portions are divided by means of a notch 110 separating the first 106 and second 108 portions from each other. The second portion 108 should however not be construed as limited to the depicted taper shaped surface. The second portion 108 may equally as well take other shapes, such as concave shape or an indentations, etc. However, the shape of the second portion should preferably differ from the cylindrical shape of the first portion a below the notch 110.

As further depicted in Fig. 2, the flexible bellows 102, 102' comprises an upper portion 140 having an open structure 141. A plate structure 120, or the like, is connected to the upper portion 140 of the flexible bellows for providing an enclosed spaced within the flexible bellows 102, 102'. The plate structure 120 may either be directly connected to the frame 2 of the vehicle 1 via a suitable fixation arrangement (not shown), or indirectly connected to the frame 2 via, for example, a bracket or the like (not shown). The flexible bellows 102, 102' is the movable portion of the vehicle suspension arrangement 100 and is thus preferably made of a rubber material to be able to move up/down on the first 106 and second 108 portions of the piston 104, i.e. the flexible bellows is "rolling" on the surface of the piston 104. Hence, when inflating gas, preferably in the form of air into the flexible bellows 102, 102' via a gas inlet 130 the plate structure 120 is moved in a direction away from the piston 104 such that the frame 2 is raised in relation to the wheel axle 3, 4. Likewise, when air is deflated from the flexible bellows 102, 102', the plate structure 120 is moved in a direction towards the piston 104 such that the frame 2 is lowered in relation to the wheel axle 3,4.

Moreover, portions of the flexible bellows 102, 102' are arranged in contact with the piston 104. In particular, a portion of the flexible bellows 102, 102' is arranged in contact with the first, cylindrical portion 106 of the piston 104. A portion of the flexible bellows 102, 102' is also arranged in contact with the second portion 108 of the piston if a sufficient amount of external load in the form of a compression force F is compressing the flexible bellows 102, 102'. Hereby, a rolling lobe 202, 202' of the flexible bellows 102. 102' is rolling up and down on the surface of the piston 104 when the flexible bellows is exposed to cyclic and dynamic loads during operation of the vehicle 1.

As is further depicted in Fig. 2, the vehicle suspension arrangement comprises a level indicator 160 for determining a distance moved by the flexible bellows 102, 102' during operation thereof, and a gas pressure sensor 170 arranged inside said flexible bellows for measuring the gas pressure level within the flexible bellows 102, 102'. The level indicator 160 and the gas pressure sensor 170 are preferably connected to the control unit 200.

As described above, a reference bellows 102' is indicated with solid lines while an aged flexible bellows 102 is indicated in dashed lines. As can be seen in Fig. 2, an aged flexible bellows 102 have an increase diameter 204 in comparison to the diameter 206 of the reference flexible bellows 102'. This is due to the effect that the rolling lobe 202 of the aged flexible bellows 102 will roll-up on the piston 104, and in particular on the first, cylindrical portion 106 of the piston 104. Hereby, an increase in effective area for the aged flexible bellows 102 can be observed. As the rolling lobe 202 of the aged flexible bellows 102 has rolled-up on the first, cylindrical portion 106 of the piston 104, a distance d2 to reach the second portion 108 of the piston 104 is larger than a distance d1 for the reference bellows to reach the second portion 108 of the piston 104. Accordingly, the distance d2 from the rolling lobe 202 of the aged flexible bellows to the notch 110 is larger than the distance d1 from the rolling lobe 202' of the reference flexible bellows 102'. The comparison of distance d1 and distance d2 should of course be made when the two flexible bellows are exposed to similar external loading and at similar environments. Preferably, the comparison is made for unloaded flexible bellows.

Due to the difference is effective area and the difference in rolling lobe position for the reference flexible bellows 102' and the aged flexible bellows 102, a relation between measured gas pressure and distance moved by the flexible bellows can be used for comparison. In detail, when the aged flexible bellows 102 and the reference flexible bellows 102' are exposed to a compression force F resulting in a specific distance of compression of the respective flexible bellows 102, 102', the gas pressure level within the flexible bellows 102, 102' are measured. Hereby, a relationship between the distance moved by the respective flexible bellows and the measure gas pressure level can be determined. For an aged flexible bellow 102, the gas pressure will be lower when moved a certain distance in comparison to the gas pressure for the reference bellows when the reference bellows is moved the same distance. It is thus possible to compare the pressure response for the aged flexible bellows 102 with the corresponding pressure response for the reference flexible bellows 102' to determine if the aged flexible bellows is in need of replacement or not. Preferably, when evaluating the pressure response, each of the flexible bellows 102, 102' are moved the distance to reach the second portion 108 of the piston 104.

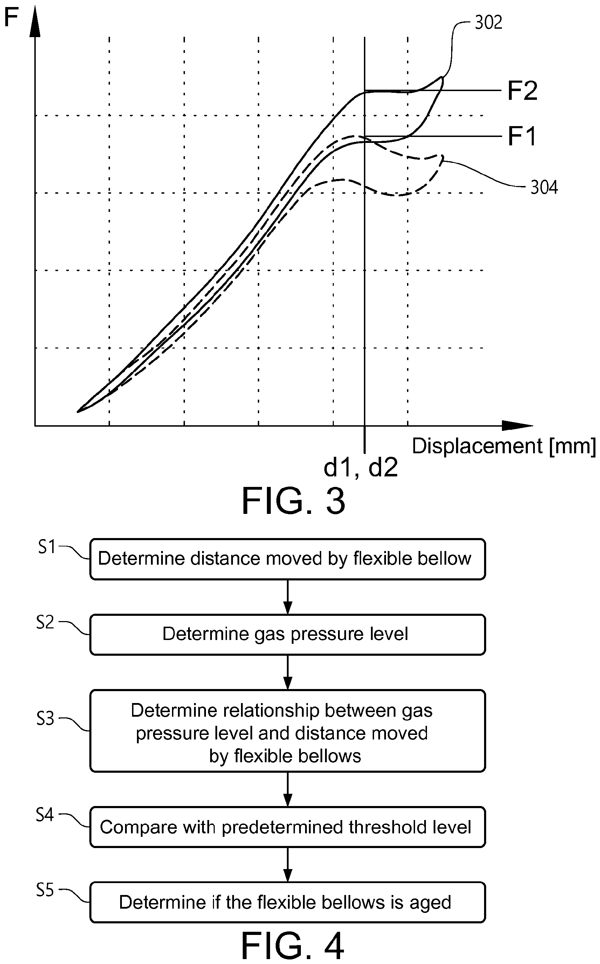

Reference is therefore made to Fig. 3 in order to describe the comparison between the aged flexible bellows 102 and the reference flexible bellows 102'. Fig. 3 is a graph illustrating the compression force needed for moving the respective rolling lobe 202, 202' to reach the second portion 108 of the piston 104.

In Fig. 3, the horizontal axis represents the vertical distance moved by the portion, i.e. the rolling lobe when the flexible bellows 102, 102' is exposed to an external compression force F. The vertical axis represents the external compression force F. The solid lines 302 represents the characteristics for the aged flexible bellows 102 while the dashed lines represents the characteristics for the reference flexible bellows 102'. Moreover, the distance d2, d1 corresponds to the distance from the rolling lobe 202, 202' to the second portion 108 of the piston 106 for the aged flexible bellows 102 and the reference flexible bellows 102', respectively. Hence, the distances d1, d2 corresponds to the distances d1, d2 depicted in Fig. 2. Accordingly, although d1 and d2 are depicted on the same horizontal position in Fig. 3, they correspond to the distance to the second portion 108 of the piston 106 as depicted in Fig. 2 unless specified otherwise.

As can be seen in Fig. 3, the force F1 required for the reference flexible bellows 102' to reach the second portion 108 of the piston 104 is lower than the force F2 required for the aged flexible bellows 102 to reach the second portion 108 of the piston 104. This is, for one reason, due to the fact that the distance d1 between the rolling lobe of the reference flexible bellows 102' and the second portion 108 of the piston 104, i.e. to the notch 110, is smaller than the distance d2 between the rolling lobe of the aged flexible bellows 102 and the second portion 108 of the piston 104, i.e. to the notch 110.

As is further depicted in Fig. 3, when the rolling lobe 202, 202' reach the second portion 108 of the piston 104, i.e. when the rolling lobe 202, 202' reach the notch 110, the flexible bellows 102, 102' will lose some force due to that the effective area decreases. As there is a significant change in the force, a distinct change in pressure within the flexible bellows will be detected. Hereby, it may be relatively easy to determine the pressure and traveled distance of the flexible bellows.

Reference is finally made to Fig. 4 in order to summarize the method for determining aging of a vehicle suspension arrangement 100 comprising a flexible bellows 102. Firstly, a distance moved by a portion, e.g. the rolling lobe 202 of the flexible bellows 102 when the suspension arrangement is exposed to an external load is determined S1. At the same time, i.e. when the portion of the flexible bellows 102 has moved the distance, a gas pressure level within the flexible bellows 102 is determined S2. A relationship, i.e. what is the pressure within the flexible bellows 102 when the portion of the flexible bellows 102 has moved the determined distance, is determined S3. The relationship is thereafter compared S4 with a predetermined threshold level for determining S5 whether the flexible bellows 102 is aged or not. The relationship is thus preferably compared with the pressure level for a corresponding distance moved by the above described reference bellows 102'.

According to a further example for determining aging of a vehicle suspension arrangement, which is not depicted in the figures, the flexible bellows may be inflated with air for lifting the chassis relative to the wheel axles. Hereby, the distance, preferably the vertical distance, moved by the frame is detected and the amount of air inflated into the flexible bellows is also detected. The amount of inflated air for the determined distance moved by the frame, or the flexible bellows), is compared to a predetermined threshold level. For lifting the frame a specific distance, different amount of inflated air will be needed for a new flexible bellows in comparison to an aged flexible bellows. As an alternative to detect the amount of inflated air, the number of opened valves needed to reach the detected distance can be determined.

It is to be understood that the present invention is not limited to the embodiments described above and illustrated in the drawings; rather, the skilled person will recognize that many changes and modifications may be made within the scope of the appended claims.

## Claims

1. A method for determining aging of a vehicle suspension arrangement (100) arranged between a frame (2) and a wheel axle (3, 4) of a vehicle (1), said suspension arrangement (100) comprising a flexible bellows (102) for damping motions from said wheel axle (3, 4), the method being **characterized by** the steps of:
- determining (S1) a distance moved by a portion of the flexible bellows (102) when the suspension arrangement is exposed to an external load;
- determining (S2) a gas pressure level within said flexible bellows (102) when the portion of said flexible bellows (102) has moved said distance;
- determining (S3) a relationship between the determined gas pressure level within said flexible bellows (102) and said distance moved by the portion of the flexible bellows (102);
- comparing (S4) the relationship with a predetermined threshold level; and
- determining (S5) that said flexible bellows is aged if a difference between the relationship and the predetermined threshold level is outside a predetermined threshold range.

2. The method according to claim 1, wherein the predetermined threshold level corresponds to a relationship between a gas pressure level within a reference flexible bellows (102') and a distance moved by a portion of said reference flexible bellows (102').

3. The method according to any one of claims 1 or 2, wherein the suspension arrangement (100) comprises a piston (104) comprising a first, cylindrical portion (106) and a second portion (108), said second portion (108) has a geometric shape different in comparison to the geometric shape of the first portion (106), wherein said flexible bellows (102) is at least partially connected to the first portion (106) of the piston (104) and arranged to move relative to the first portion (106) when the suspension arrangement is exposed to said external load.

4. The method according to claim 3, wherein the flexible bellows is exposed to an external load moving said portion to reach the second portion (108) of the piston (104), the method further comprising the steps of:
- determining the distance moved by the portion of the flexible bellows (102) when the portion of the flexible bellows (102) reaches the second portion (108) of the piston (104);
- comparing the determined distance to the second portion (108) with a predetermined reference distance to reach the second portion (108); and
- determining that said flexible bellows (102) is aged if a difference between the determined distance and the predetermined reference distance is outside a predetermined distance range.

5. The method according to any one of claims 3 or 4, wherein the second portion (108) of the piston (106) comprises a taper shaped surface.

6. The method according to any one of the preceding claims, wherein the suspension arrangement comprises a level indicator for determining distance moved by the portion of the flexible bellows.

7. The method according to claim 6, wherein the external load is a compression force acting on the suspension arrangement (100), said compression force being determined based on the distance detected by the level indicator and a detected mass of the vehicle (1).

8. The method according to any one of the preceding claims, wherein the suspension arrangement (100) comprises a gas pressure sensor arranged inside said flexible bellows for measuring the gas pressure level.

9. A control unit (200) arranged for determining aging of a vehicle suspension arrangement (100) arranged between a frame (2)and a wheel axle (3, 4) of a vehicle (1), said suspension arrangement (100) comprising a flexible bellows (102) for damping motions from said wheel axle (3, 4), **characterized in that** the control unit (200) is configured to:
- receive a signal from a level indicator for determining a distance moved by a portion of the flexible bellows (102) when the suspension arrangement is exposed to an external load;
- receive a signal from a gas pressure sensor for determining a gas pressure level within said flexible bellows (102) when the portion of said flexible bellows (102) has moved said distance;
- determine a relationship between the determined gas pressure level within said flexible bellows (102) and said distance moved by the portion of the flexible bellows (102);
- compare the relationship between the determined gas pressure level within said flexible bellows (102) and said distance moved by the portion of the flexible bellows (102) with a predetermined threshold level; and
- determine that said flexible bellows (102) is aged if a difference between the relationship between the determined gas pressure level within said flexible bellows (102) and said distance moved by the portion of the flexible bellows (102) and the predetermined threshold level is outside a predetermined threshold range.

10. A vehicle (1) comprising a vehicle suspension arrangement (100) arranged between a frame (2) and a wheel axle (3, 4) of the vehicle (1), and a control unit (200) according to claim 9.

11. A computer program comprising program code means for performing the steps of any one of claims 1 - 8 when said program is run on a computer.

12. A computer readable medium carrying a computer program comprising program means for performing the steps of any one of claims 1 - 8 when said program means is run on a computer.

## Patentansprüche

1. Verfahren zum Bestimmen der Alterung einer Fahrzeugaufhängungsanordnung (100), die zwischen einem Rahmen (2) und einer Radachse (3, 4) eines Fahrzeugs (1) angeordnet ist, wobei die Aufhängungsanordnung (100) einen flexiblen Balg (102) zum Dämpfen von Bewegungen von der Radachse (3, 4) umfasst, wobei das Verfahren durch die folgenden Schritte gekennzeichnet ist:
- Bestimmen (S1) einer Distanz, die von einem Abschnitt des flexiblen Balgs (102) bewegt wird, wenn die Aufhängungsanordnung einer externen Last ausgesetzt ist;
- Bestimmen (S2) eines Gasdruckniveaus innerhalb des flexiblen Balgs (102), wenn sich der Abschnitt des flexiblen Balgs (102) um die genannte Distanz bewegt hat;
- Bestimmen (S3) einer Beziehung zwischen dem ermittelten Gasdruckniveau innerhalb des flexiblen Balgs (102) und der von dem Abschnitt des flexiblen Balgs (102) bewegten Distanz;
- Vergleichen (S4) des Verhältnisses mit einem vorgegebenen Schwellwert; und
- Bestimmen (S5), dass der flexible Balg gealtert ist, wenn eine Differenz zwischen dem Verhältnis und dem vorgegebenen Schwellenwert außerhalb eines vorgegebenen Schwellenwertbereichs liegt.

2. Verfahren nach Anspruch 1, wobei der vorgegebene Schwellenwert einer Beziehung zwischen einem Gasdruckniveau innerhalb eines flexiblen Referenzbalgs (102') und einer von einem Abschnitt des flexiblen Referenzbalgs (102') bewegten Distanz entspricht.

3. Verfahren nach einem der Ansprüche 1 oder 2, wobei die Aufhängungsanordnung (100) einen Kolben (104) umfasst, der einen ersten, zylindrischen Abschnitt (106) und einen zweiten Abschnitt (108) umfasst, wobei der zweite Abschnitt (108) eine geometrische Form aufweist, die sich im Vergleich zur geometrischen Form des ersten Abschnitts (106) unterscheidet, wobei der flexible Balg (102) zumindest teilweise mit dem ersten Abschnitt (106) des Kolbens (104) verbunden ist und so angeordnet ist, dass er sich relativ zum ersten Abschnitt (106) bewegt, wenn die Aufhängungsanordnung der externen Last ausgesetzt ist.

4. Verfahren nach Anspruch 3, wobei der flexible Balg einer externen Last ausgesetzt wird, die den genannten Abschnitt bewegt, um den zweiten Abschnitt (108) des Kolbens (104) zu erreichen, wobei das Verfahren ferner die folgenden Schritte umfasst:
- Bestimmen der von dem Abschnitt des flexiblen Balgs (102) bewegten Distanz, wenn der Abschnitt des flexiblen Balgs (102) den zweiten Abschnitt (108) des Kolbens (104) erreicht;
- Vergleichen der ermittelten Distanz zum zweiten Abschnitt (108) mit einer vorgegebenen Referenzdistanz zum Erreichen des zweiten Abschnitts (108); und
- Bestimmen, dass der flexible Balg (102) gealtert ist, wenn eine Differenz zwischen der ermittelten Distanz und der vorgegebenen Referenzdistanz außerhalb eines vorgegebenen Distanzbereichs liegt.

5. Verfahren nach einem der Ansprüche 3 oder 4, wobei der zweite Abschnitt (108) des Kolbens (106) eine kegelförmige Oberfläche umfasst.

6. Verfahren nach einem der vorhergehenden Ansprüche, wobei die Aufhängungsanordnung eine Standanzeige zum Bestimmen der von dem Abschnitt des flexiblen Balgs bewegten Distanz umfasst.

7. Verfahren nach Anspruch 6, wobei die externe Last eine auf die Aufhängungsanordnung (100) wirkende Druckkraft ist, die auf der Grundlage der von der Standanzeige ermittelten Distanz und einer erfassten Masse des Fahrzeugs (1) bestimmt wird.

8. Verfahren nach einem der vorhergehenden Ansprüche, wobei die Aufhängungsanordnung (100) einen im Inneren des flexiblen Balgs angeordneten Gasdrucksensor zur Messung des Gasdruckniveaus umfasst.

9. Steuereinheit (200) zum Bestimmen der Alterung einer Fahrzeugaufhängungsanordnung (100), die zwischen einem Rahmen (2) und einer Radachse (3, 4) eines Fahrzeugs (1) angeordnet ist, wobei die Aufhängungsanordnung (100) einen flexiblen Balg (102) zum Dämpfen von Bewegungen von der Radachse (3, 4) umfasst, **dadurch gekennzeichnet, dass** die Steuereinheit (200) konfiguriert ist, zum:
- Empfangen eines Signals von einer Standanzeige zum Bestimmen einer Distanz, die von einem Abschnitt des flexiblen Balgs (102) zurückgelegt wird, wenn die Aufhängungsanordnung einer externen Last ausgesetzt ist;
- Empfangen eines Signals von einem Gasdrucksensor zum Bestimmen eines Gasdruckniveaus innerhalb des flexiblen Balgs (102), wenn der Abschnitt des flexiblen Balgs (102) die Distanz zurückgelegt hat;
- Bestimmen einer Beziehung zwischen dem ermittelten Gasdruckniveau innerhalb des flexiblen Balgs (102) und der von dem Abschnitt des flexiblen Balgs (102) bewegten Distanz;
- Vergleichen der Beziehung zwischen dem ermittelten Gasdruckniveau innerhalb des flexiblen Balgs (102) und der durch den Abschnitt des flexiblen Balgs (102) bewegten Distanz mit einem vorgegebenen Schwellenwert; und
- Bestimmen, dass der flexible Balg (102) gealtert ist, wenn eine Differenz zwischen der Beziehung zwischen dem ermittelten Gasdruckniveau innerhalb des flexiblen Balgs (102) und der durch den Abschnitt des flexiblen Balgs (102) bewegten Distanz und dem vorgegebenen Schwellenwert außerhalb eines vorgegebenen Schwellenwertbereichs liegt.

10. Fahrzeug (1) mit einer Fahrzeugaufhängungsanordnung (100), die zwischen einem Rahmen (2) und einer Radachse (3, 4) des Fahrzeugs (1) angeordnet ist, und einer Steuereinheit (200) nach Anspruch 9.

11. Computerprogramm, das Programmcodemittel zum Durchführen der Schritte nach einem der Ansprüche 1 - 8 umfasst, wenn das Programm auf einem Computer ausgeführt wird.

12. Computerlesbares Medium mit einem Computerprogramm, das Programmcodemittel zum Durchführen der Schritte nach einem der Ansprüche 1 - 8 umfasst, wenn das Programmmittel auf einem Computer ausgeführt wird.

## Revendications

1. Procédé de détermination du vieillissement d'un système de suspension de véhicule (100) disposé entre un châssis (2) et un essieu de roues (3, 4) d'un véhicule (1), ledit système de suspension (100) comprenant un soufflet souple (102) pour amortir les mouvements dudit essieu de roues (3, 4), ce procédé étant **caractérisé par** les étapes suivantes :
- détermination (S1) d'une distance parcourue par une section du soufflet souple (102) lorsque le système de suspension est exposé à une charge externe ;
- détermination (S2) d'un niveau de pression de gaz dans ledit soufflet souple (102) lorsque la section dudit soufflet souple (102) a parcouru ladite distance ;
- détermination (S3) d'une relation entre le niveau de pression de gaz déterminé dans ledit soufflet souple (102) et ladite distance parcourue par la section du soufflet souple (102) ;
- comparaison (S4) de la relation avec un niveau seuil prédéterminé ; et
- détermination que (S5) ledit soufflet souple a vieilli si une différence entre la relation et le niveau seuil prédéterminé est en dehors d'une plage de seuil prédéterminée.

2. Procédé selon la revendication 1, dans lequel le niveau seuil prédéterminé correspond à une relation entre un niveau de pression de gaz dans un soufflet souple de référence (102') et une distance parcourue par une section dudit soufflet souple de référence (102').

3. Procédé selon l'une quelconque des revendications 1 ou 2, dans lequel le système de suspension (100) comprend un piston (104) comprenant une première section cylindrique (106) et une seconde section (108), ladite seconde section (108) ayant une forme géométrique différente comparativement à la forme géométrique de la première section (106), ledit soufflet souple (102) étant au moins partiellement connecté à la première section (106) du piston (104) et conçu pour bouger par rapport à la première section (106) lorsque le système de suspension est exposé à ladite charge externe.

4. Procédé selon la revendication 3, dans lequel le soufflet souple est exposé à une charge externe déplaçant ladite section pour atteindre la seconde section (108) du piston (104), le procédé comprenant en outre les étapes suivantes :
- détermination de la distance parcourue par la section du soufflet souple (102) lorsque la section du soufflet souple (102) atteint la seconde section (108) du piston (104) ;
- comparaison de la distance déterminée jusqu'à la seconde section (108) avec une distance de référence prédéterminée pour atteindre la seconde section (108) ; et
- détermination que ledit soufflet souple (102) a vieilli si une différence entre la distance déterminée et la distance de référence prédéterminée est en dehors d'une plage de distance prédéterminée.

5. Procédé selon l'une quelconque des revendications 3 ou 4, dans lequel la seconde section (108) du piston (106) comprend une surface en forme de cône

6. Procédé selon l'une quelconque des revendications précédentes, dans lequel le système de suspension comprend un indicateur de niveau pour déterminer la distance parcourue par la section du soufflet souple.

7. Procédé selon la revendication 6, dans lequel la charge externe est une force de compression agissant sur le système de suspension (100), ladite force de compression étant déterminée en se basant sur la distance détectée par l'indicateur de niveau et une masse détectée du véhicule (1).

8. Procédé selon l'une quelconque des revendications précédentes, dans lequel le système de suspension (100) comprend un capteur de pression de gaz disposé à l'intérieur dudit soufflet souple pour mesurer le niveau de pression de gaz.

9. Unité de commande (200) conçue pour déterminer le vieillissement d'un système de suspension de véhicule (100) disposé entre un châssis (2) et un essieu de roues (3, 4) d'un véhicule (1), ledit système de suspension (100) comprenant un soufflet souple (102) pour amortir les mouvements dudit essieu de roues (3, 4), **caractérisée en ce que** l'unité de commande (200) est configurée pour :
- recevoir un signal d'un indicateur de niveau pour déterminer une distance parcourue par une section du soufflet souple (102) lorsque le système de suspension est exposé à une charge externe ;
- recevoir un signal d'un capteur de pression de gaz pour déterminer un niveau de pression de gaz dans ledit soufflet souple (102) lorsque la section dudit soufflet souple (102) a parcouru ladite distance ;
- déterminer une relation entre le niveau de pression de gaz déterminé dans ledit soufflet souple (102) et ladite distance parcourue par la section du soufflet souple (102) ;
- comparer la relation entre le niveau de pression de gaz déterminé dans ledit soufflet souple (102) et ladite distance parcourue par la section du soufflet souple (102) avec un niveau seuil prédéterminé ; et
- déterminer que ledit soufflet souple (102) a vieilli si une différence entre la relation entre le niveau de pression de gaz déterminé dans ledit soufflet souple (102) et ladite distance parcourue par la section du soufflet souple (102) et le niveau seuil prédéterminé est en dehors d'une plage de seuil prédéterminée.

10. Véhicule (1) comprenant un système de suspension de véhicule (100) disposé entre un châssis (2) et un essieu de roues (3, 4) du véhicule (1), et une unité de commande (200) selon la revendication 9.

11. Programme informatique comprenant un moyen de codage de programme pour réaliser les étapes de l'une quelconque des revendications 1 à 8 lorsque ledit programme est exécuté sur un ordinateur.

12. Support lisible sur ordinateur comportant un programme informatique comprenant un moyen de programmation pour réaliser les étapes de l'une quelconque des revendications 1 à 8 lorsque ledit moyen de programmation est exécuté sur un ordinateur.
